Europäisches Patentamt

European Patent Office

Office européen des brevets

(11) Veröffentlichungsnummer: **0 143 180**
**A1**

(12) **EUROPÄISCHE PATENTANMELDUNG**

(21) Anmeldenummer: **84109289.3**

(22) Anmeldetag: **06.08.84**

(51) Int. Cl.⁴: **F 16 G 1/00**

(30) Priorität: **03.09.83 DE 8325391 U**

(43) Veröffentlichungstag der Anmeldung: **05.06.85**
**Patentblatt 85/23**

(84) Benannte Vertragsstaaten: **AT BE CH DE FR GB IT LI LU NL SE**

(71) Anmelder: **Continental Gummi-Werke Aktiengesellschaft, Königsworther Platz 1, D-3000 Hannover 1 (DE)**

(72) Erfinder: **Koch, Fritz, Ordasstrasse 23, D-3138 Dannenberg (DE)**
Erfinder: **Aue, Rüdiger, Am Spring 2, D-3138 Dannenberg (DE)**
Erfinder: **Witt, Klaus, Kochstrasse 12, D-3138 Dannenberg (DE)**

(54) **Kraftübertragungsriemen.**

(57) Die Erfindung bezieht sich auf Riemen der obigen Art aus Gummi oder dergleichen mit eingebetteten textilen oder metallischen Verstärkungen. Um unter Umständen gefährliche elektrische Aufladungen sicher ableiten zu können, ist aufgrund der Erfindung der Kraftübertragungsriemen (1) mit einem elektrisch leitfähigen Oberflächenbelag (14) versehen, der aus einem elektrisch leitfähige Teilchen in feiner Verteilung enthaltenden Elastomerlack besteht. Dabei ist es ausreichend, wenn dieser Oberflächenbelag lediglich Teile des Querschnittsumfanges bedeckt.

EP 0 143 180 A1

ACTORUM AG

1. Continental Gummi-Werke Aktiengesellschaft, 3000 Hannover
2. Wilhelm Herm. Müller & Co. KG, 3000 Hannover

Kraftübertragungsriemen

Die Neuerung bezieht sich auf Kraftübertragungsriemen aus Gummi oder gummiähnlichen Kunststoffen mit eingebetteten textilen oder metallischen Verstärkungen.

Im Gebrauch kraftgetriebener Geräte, Instrumente und Maschinen ergibt sich häufig die Notwendigkeit, störende und unter Umständen gefährliche elektrische Aufladungen sicher abzuleiten. Im allgemeinen bietet dies keine Schwierigkeiten, und in vorwiegend metallischen Konstruktionen stellt sich ein durchgehender, zusammenhängender Leitungsweg ohnehin ohne besondere Maßnahmen schon von selbst ein. Dagegen bilden die in ihrer Hauptmasse aus elastomeren Stoffen hergestellten Treibriemen der Antriebsmotoren ein isolierendes Zwischenglied, das die ungestörte Elektrizitätsableitung unterbricht und infolgedessen das Ansammeln gefährlicher Elektrizitätsmengen begünstigt. Es kommt dazu noch die Wirkung der umlaufenden Riemen selbst als Erzeuger statischer Reibungselektrizität. Als Abhilfe wäre es zwar denkbar, die Treibriemen aus elektrisch leitfähigen Elastomeren herzustellen und beispielsweise den hierzu verwendeten Kautschuk- oder Kunststoffmischungen höhere Rußanteile oder andere leitfähige Stoffe zuzusetzen. Solche an sich bekannte Mischungen können aber den dynamischen Beanspruchungen der Riemen im Betrieb nicht genügen - ganz davon abgesehen, daß die ursprünglich eingestellte Leitfähigkeit mit zunehmender Belastung der Riemen durch Unterbrechen der bestehenden Rußbrücken schnell absinkt.

Es ist demgegenüber Aufgabe der Neuerung, Kraftübertragungsriemen unabhängig von ihrem inneren Aufbau und ihrer Gestaltung und ohne Rücksicht auf wechselnde dynamische Beanspruchungen dauerhaft und zuverlässig elektrisch leitfähig auszubilden. Zum Lösen dieser Aufgabe sind Riemen der eingangs genannten Art gemäß der Neuerung mit einem elektrisch leitfähigen Oberflächenbelag vorzugsweise aus einem elektrisch leitfähigen Teilchen in feiner Verteilung enthaltenden Elastomerlack versehen. Elektrisch leitfähiger Ruß kann dem Lack in Anteilen zwischen 2 bis 30%, bevorzugt zwischen 5 bis 15%, bezogen auf die Lackbasis, zugesetzt werden. Vorteilhaft ist der Elastomerlack ein Polyurethanlack, und zwar entweder in einem Einkomponentensystem oder wahlweise stattdessen auch Polyäther- oder Polyester-Polyurethanlack in einem Zweikomponentensystem.

Die Neuerung schafft in jeder Hinsicht gebrauchtüchtige Treibriemen mit einer beliebig einstellbaren oberflächlichen elektrischen Leitfähigkeit, die unabhängig von den dynamischen Beanspruchungen im Gebrauch der Riemen zeitlich unbegrenzt in voller Höhe erhalten bleibt. Die Lackschicht, die beispielsweise durch Streichen oder Sprühen aufgebracht werden kann, haftet mit stoffschlüssiger Bindung an der Riemenoberfläche und fügt sich allen Verformungen, denen die Riemen im Gebrauch unterworfen werden, widerstandslos an. Sie kann sich je nach den vorherrschenden Bedingungen über den gesamten Querschnittsumfang oder nur über Teile, beispielsweise den Riemenrücken oder die Flanken, erstrecken. Die Schichtdicke bewegt sich zweckmäßig in den Grenzen zwischen 0,05 und 0,5 mm.

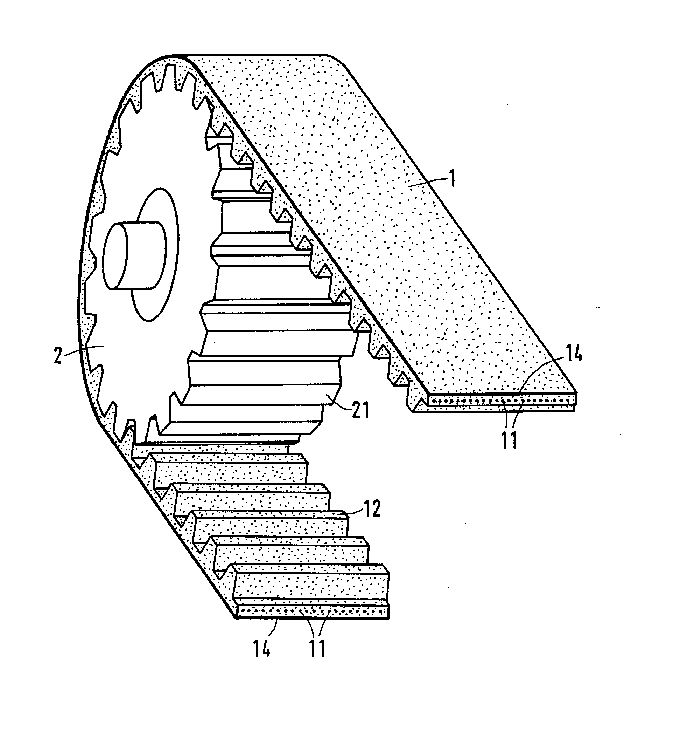

Zum Verdeutlichen des Neuerungsgedankens ist ein Ausführungsbeispiel in der Zeichnung schematisch dargestellt. Die Zeichnung zeigt einen Teilabschnitt eines Zahnriementriebes in perspektivischer Ansicht.

Der gezeichnete Riementrieb setzt sich aus zwei oder mehr Zahnscheiben und einem diese umschlingenden endlosen Zahnriemen 1, gegebenenfalls auch noch einer auf dem Riemenrücken sich abwälzenden Spannrolle zusammen. Der Übersichtlichkeit halber ist nur eine Zahnscheibe 2 angedeutet. Der Zahnriemen 1, der beispielsweise aus Polyurethan oder einem anderen elastomeren Kunststoff oder stattdessen auch aus Kautschuk hergestellt sein kann, enthält schraubengangartig in Längsrichtung durchlaufende eingebettete Stahldrahtseile 11 oder andere fadenförmige Festigkeitsträger und ist auf seiner Innenseite mit angeformten Zähnen 12 versehen, die mit den Lücken zwischen den Zähnen 21 der Zahnscheibe 2 in Eingriff treten können.

Gemäß der Neuerung trägt der Zahnriemen 1 auf seinem den Zähnen 12 abgekehrten flachen Rücken eine elektrisch leitfähige Oberflächenbeschichtung 14 aus einem mit leitfähigem Ruß angereicherten Polyurethanlack.

Die Neuerung ist nicht auf Zahnriemen beschränkt, sondern in gleicher Weise auf Treibriemen anderer Art, beispielsweise Keilriemen, Flach- oder Rundriemen u.a. anwendbar.

Schutzansprüche:

1. Kraftübertragungsriemen aus Gummi oder gummiähnlichen Kunststoffen mit eingebetteten textilen oder metallischen Verstärkungen, dadurch gekennzeichnet, daß er mit einem elektrisch leitfähigen Oberflächenbelag (14) versehen ist.

2. Riemen nach Anspruch 1, dadurch gekennzeichnet, daß der Belag (14) aus einem elektrisch leitfähige Teilchen in feiner Verteilung enthaltenden Elastomerlack besteht.

3. Riemen nach Anspruch 2, dadurch gekennzeichnet, daß dem Elastomerlack leitfähiger Ruß zugemischt ist.

4. Riemen nach Anspruch 3, dadurch gekennzeichnet, daß der Elastomerlack einen Rußanteil zwischen 2 bis 30% enthält.

5. Riemen nach den Ansprüchen 2 bis 4, dadurch gekennzeichnet, daß der Elastomerlack ein Polyurethanlack ist.

6. Riemen nach Anspruch 5, dadurch gekennzeichnet, daß der Elastomerlack ein Polyäther- oder Polyester-Polyurethanlack ist.

7. Riemen nach den Ansprüchen 1 bis 6, dadurch gekennzeichnet, daß der Oberflächenbelag den gesamten Querschnittsumfang geschlossen überdeckt.

8. Riemen nach den Ansprüchen 1 bis 6, dadurch gekennzeichnet, daß der Oberflächenbelag (14) nur Teile des Querschnittsumfanges bedeckt.

Hannover, den 1. September 1983
83-8 G/Sü                    Sü/Lo

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 318 441 (WALTON)<br><br>* Seite 2, linke Spalte, Zeilen 4-17, rechte Spalte, Zeilen 29-33; Figuren 2,7 * | 1,2,7, 8 | F 16 G 1/00 |
| X | FR-A-1 300 188 (DUNLOP)<br>* Insgesamt * | 1 | |
| X | DE-B-1 017 425 (FINDEISEN)<br>* Spalte 3, Zeilen 17-19 * | 1,8 | |
| X | FR-A-1 242 629 (HABASIT-WERK)·<br>* Insgesamt * | 1-3,8 | |
| X | US-A-3 542 633 (GOLDSMITH)<br>* Spalte 3, Zeilen 18-27; Figur 3 * | 1,2,8 | **RECHERCHIERTE SACHGEBIETE (Int. Cl.4)**<br><br>F 16 G |

Der vorliegende Recherchenbericht wurde für alle Patentansprüche erstellt.

| Recherchenort<br>DEN HAAG | Abschlußdatum der Recherche<br>06-12-1984 | Prüfer<br>BARON C. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82